Europäisches Patentamt

European Patent Office

Office européen des brevets

(19)

(11) Veröffentlichungsnummer: **0 075 296**
**B2**

(12) **NEUE EUROPÄISCHE PATENTSCHRIFT**

(45) Veröffentlichungstag der neuen Patentschrift:
**02.05.90**

(51) Int. Cl.⁵: **H 02 H 3/093,** H 02 H 6/00

(21) Anmeldenummer: **82108609.7**

(22) Anmeldetag: **17.09.82**

(54) Digitaler Überstromauslöser.

(30) Priorität: **21.09.81 DE 3137496**

(43) Veröffentlichungstag der Anmeldung:
**30.03.83 Patentblatt 83/13**

(45) Bekanntmachung des Hinweises auf die
Patenterteilung:
**05.06.85 Patenblatt 85/23**

(45) Bekanntmachung des Hinweises auf die
Entscheidung über den Einspruch:
**02.05.90 Patentblatt 90/18**

(84) Benannte Vertragsstaaten:
**FR GB IT**

(56) Entgegenhaltungen:
**EP-A-0 005 324**
**DD-B- 147 595**
**DE-A-1 952 582**
**DE-A-2 528 767**
**DE-B-2 310 103**

**WO 81/02496**

(73) Patentinhaber: **Siemens Aktiengesellschaft**
**Wittelsbacherplatz 2**
**D-8000 München 2 (DE)**

(72) Erfinder: **Simmel, Hans-Eberhard, Dipl.-Ing.**
**Piemontstrasse 6**
**D-7500 Karlsruhe 31 (DE)**

Courier Press, Leamington Spa, England.

**Beschreibung**

Die Erfindung bezieht sich auf einen digitalen Überstromauslöser mit einem nichtpermanenten digitalen Speicher für den thermischen Anregungszustand und einem einen Analog-Digital-Wandler umfassenden Mikroprozessor.

Beim Wiedereinschalten von durch Überstromauslöser abgeschalteten Anlagen oder Netzen muß der momentan in der Anlage vorhandene thermische Zustand berücksichtigt werden, weil eine nach dem Wiedereinschalten erfolgende Energiezufuhr eine von dem Zustand vor dem Wiedereinschalten abhängige Wirkung hat. Dabei ist der Zustand vor dem Wiedereinschalten nicht nur abhängig vom beim Auslösen vorhandenen Zustand, sondern auch von der seit dem Auslösen verstrichenen Zeit, während der eine Abkühlung der abgeschalteten Anlage erfolgt.

In thermisch arbeitenden Überstromauslösern ist die für die thermische Auslösung relevante information in Form von Wärme gespeichert. Nach dem Ansprechen kühlen diese Überstromauslöser ab, so daß sich die oben gestellte Forderung von selbst erfüllt. Bei digital arbeitenden Überstromauslösern soll dagegen eine rein rechnerische Nachbildung des thermischen Anregungszustandes in einem Mikroprozessor erfolgen, wobei die zahlenmäßige Speicherung dieses Zustandes in einem nichtpermanenten (flüchtigen) Speicher stattfindet. Soll, wie es zweckmäßig ist, ein digitaler Überstromauslöser seine Versorgungsenergie dem zu überwachenden Netz entnehmen, so verschwinden die im nichtpermanenten Speicher abgelegten digitalen Informationen, wenn der Überstromauslöser anspricht oder das zu überwachende Netz anderweitig abgeschaltet wird.

Ein bekannter Überstromauslöser ist in der DD—B—147 595 beschrieben, der die Merkmale a), c) und d) des Anspruchs aufweist. Das bei dieser Entgegenhaltung vorgesehene Mittel zur Umwandlung des Speicherinhaltes in eine Spannung ist ein Digital-Analog-Wandler. Ein solcher Wandler ist eine ziemlich aufwendige Einheit; sie muß im vorgesehenen Fall einen digitalen Zahlenwert in eine proportionale Ladespannung für einen Kondensator umwandeln. Es leitet also bei der bekannten Anordnung die Wiederkehr der Stromversorgung nicht direkt die Rückübersetzung der im RC-Glied verbliebenen Ladespannung in eine digitalen Speicher ein. Vielmehr wird die Restspannung des RC-Gliedes zum wiederkehrenden analogen Meßsignal addiert und dann erst über einen Spannungs-Frequenz-Wandler und einen Zähler die Digitalisierung des Summenwertes vorgenommen.

In der internationalen Patentanmeldung WO 81/02496 ist ein digitaler Überstromauslöser mit einem Mikroprozessor beschrieben, bei dem das thermische Verhalten des Auslösers rechnerisch über die Software des Mikroprozessors nachgebildet ist.

Der Erfindung lag die Aufgabe zugrunde, die übersetzung des Inhaltes des flüchtigen Digitalspeichers in eine Ladespannung eines RC-Gliedes mit weniger aufwendigeren Mitteln zu bewerkstelligen.

Diese Aufgabe wird bei einem eingangs genannten digitalen Überstromauslöser gemäß der Erfindung mit den Merkmalen b) und e) des Anspruchs gelöst.

Mit diesen Merkmalen verhält sich ein digitaler Überstromauslöser wie ein thermischer Überstromauslöser, ohne daß eine zusätzliche aufwendige programmierung des im digitalen Auslöser enthaltenen Mikroprozessors notwendig wird.

Das RC-Glied wird also auf eine normierte Spannung aufgeladen, die über einen Analog-Digital-Wandler und einen Vergleicher dem Inhalt des nichtpermanenten digitalen Speichers nachgebildet ist.

Das Abkühlen eines Körpers wird in erster Näherung durch folgende Gleichung beschrieben:

$$\theta(t) = \theta(t_o) \cdot e^{-\frac{t-t_o}{\tau}}$$

wobei $\theta(t)$ den zeitlichen Verlauf einer Temperatur darstellt. $\theta(t_o)$ ist die Temperatur in einem Anfangszustand. Wie zu sehen ist, verläuft die Abkühlungsfunktion nach einem Exponentialgesetzt, wobei $\tau$ eine Abkühlungszeitkonstante darstellt. Diese Abkühlungsfunktion entspricht in ihrer Form der Entladegleichung eines RC-Gliedes:

$$U(t) = U(t_o) \cdot e^{-\frac{t-t_o}{\tau}}$$

Hier stellt $U(t_o)$ die Spannung eines Kondensators im aufgeladenen Zustand dar, $\tau$ ist die Zeitkonstante des RC-Gliedes. Es läßt sich deshalb für einen digitalen Überstromauslöser die thermische Abkülung durch ein sich entladendes RC-Glied nachbilden, das vor dem Aussetzen der Betriebsenergie auf eine definierte Spannung aufgeladen worden ist. Nach dem Wiedereinschalten der Betriebsspannung liest der Mikroprozessor des digitalen Überstromauslösers über einen Analogeingang die am RC-Glied anstehende Spannung ein, sie ist proportional zum neuen thermischen Ausgangsanregungszustand des Überstromauslösers.

Ein Ausführungsbeispiel der Erfindung ist anhand einer schematischen Figur beschrieben.

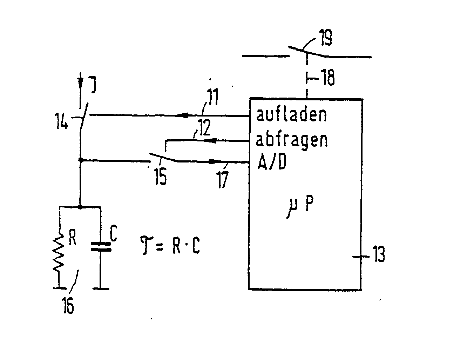

Beim Ausführungsbeispiel nach der Figur sind über Steuerausgänge 11 und 12 eines Mikroprozessors 13 zwei Schalter 14 und 15 steuerbar. Schalter 14 dient zum Aufladen eines RC-Gliedes 16, dessen Ladespannung über den Schalter 15 einem Analog-Digital-Wandlereingang 17 innerhalb des Mikroprozessors 13 zugeführt wird. Ein weiterer Steuerausgang 18 des Mikroprozessors 13 ist mit einem Auslöseschalter 19 verbunden.

Beim Ausführungsbeispiel wird der thermische Anregungszustand ausschließlich im RC-Glied gespeichert. Dazu wird der thermische Anregungszustand auf einen bekannten Wert, z.B. den Auslösewert $\theta_a$, normiert. Der normierten Größe, $\theta(t_0)/\theta_a$ wird eine analoge Spannung

$$U_N = \frac{\theta(t_0)}{\theta_a} \cdot U_{REF}$$

zugeordnet, die dem RC-Glied 16 vor dem Aussetzen der Vorsorgungsspannung aufgeprägt wird. Beim Ausführungsbeispiel wird diese durch eine Rückführungsschaltung unter Einbeziehung des mikroprozessoreigegen Analog-Diogital-Wandlers realisiert. Dazu wird beim Auslösen das RC-Glied 16 so lange mit einem Strom I aufgeladen, bis ein über den Analog-Digital-Wandler gemessener Spannungswert mit dem im nichtpermanenten Speicher des Mikroprozessors 13 gespeicherten Wert übereinstimmt.

Nach dem Wiedereinschalten der Vorsorgungsspannung wird die Spannung am RC-Glied über den mikroprozessoreigenen Analog-Digital-Wandler in den Mikroprozessor 13 eingelesen und mit der Normierungskonstanten $\theta_a$ multipliziert. Für die Spannung am RC-Glied 16 beim Wiedereinschalten gilt:

$$U(t) = \frac{\theta(t_0)}{\theta_a} \cdot e^{-\frac{t-t_0}{\tau}} \cdot U_{REF}$$

Daraus folgt für den thermischen Anregungszustand:

$$\theta(t) = \frac{U(t)}{U_{REF}} \cdot \theta_a = \theta(t_0) \cdot e^{-\frac{t-t_0}{\tau}}$$

## Patentansprüch

Digitaler Überstromauslöser mit einer Stromversorgung aus dem zu überwachenden Stromkreis und

a) mit einem nichtpermanenten digitalen Speicher für den thermischen Anregungszustand,

b) mit einem einen Analog-Digital-Wandler umfassenden Mikroprozessor (13),

c) mit einem mit einer bekannten Spannung aufgeladenen RC-Glied (16) zur Simulierung eines Abkühlvorganges,

d) wobei das RC-Glied (16) zur Simulierung des Abkühlvorganges zugleich als analoger Speicher zur Speicherung des thermischen Anregungszustandes beim Auslösen eingesetzt ist und

e) das RC-Glied (16) vor dem Ansprechen des Auslösers auf eine normierte Spannung aufgeladen ist, die über einen mikroprozessoreigenen Analog-Digital-Wandler und Vergleicher dem Inhalt des nichtpermanenten digitalen Speichers nachgebildet ist, wobei ein Ausgangssignal des Vergleichers die Aufladung des RC-Gliedes (16) unterbricht und eine Wiederkehr der Stromversorgung die Rückübersetzung der verbliebenen Ladespannung des RC-Gliedes (16) in einen digitalen Speicherwert über den Analog-Digital-Wandler im Mikroprozessor (13) einleitet.

## Revendications

Déclencheur numérique à maximum comportant une alimentation provenant du circuit à contrôler, ainsi que

a) une mémoire numérique non permanente pour l'état d'excitation thermique,

b) un microprocesseur (13) pourvu d'un convertisseur analogique-numérique,

c) un circuit RC (16) chargé avec une tension connue pour simuler un processus de refroidissement,

d) le circuit RC (16) servant à simuler le processus de refroidissement étant également utilisé comme mémoire analogique pour la mémorisation de l'état d'excitation thermique, au déclenchement, et

e) le circuit RC (16) étant chargé, avant la réponse du déclencheur, à une tension normalisée qui simulée, par l'intermédiaire d'un convertisseur analogique-numérique et d'un comparateur qui sont propres au microprocesseur, pour correspondre au contenu de la mémoire numérique non permanente, alors qu'un signal de sortie du comparateur interrompt la charge du circuit RC (16) et qu'un retour de l'alimentation en courant déclenche la transformation de la tension de charge résiduelle du circuit RC (16) en une valeur numérique de mémorisation, par l'intermédiaire du convertisseur analogique-numérique contenu dans le microprocesseur (13).

## Claims

1. Digital overcurrent trip having a power supply from the electric circuit to be monitored, and

a) having a non-permanent digital memory for the thermal excitation state,

b) having a microprocessor (13) comprising an analog-to-digital converter,

c) having an RC-element (16), charged to a known voltage, for the simulation of a cooling process,

d) the RC-element (16) for the simulation of the cooling process being used also as an analog memory for storing the thermal excitation state at tripping, and

e) the RC-element (16) being charged, before the operation of the trip, to a normalised voltage which simulates the content of the non-permanent digital memory by way of an analog-to-digital converter and comparator belonging to the microprocessor, an output signal from the comparator interrupting the charging of the RC-element (16), and a restoration of the power supply initiating the retranslation of the remaining charging voltage of the RC-element (16) into a digital memory value, by way of the analog-to-digital converter in the microprocessor (13).

$\mathfrak{T} = R \cdot C$